# FASCICULE DE BREVET EUROPEEN

(11) **EP 2 656 352 B1**
(45) Date de publication et mention de la délivrance du brevet: **13.07.2016**
(21) Numéro de dépôt: 11802078.3
(22) Date de dépôt: 20.12.2011
(51) Int. Cl.: G21F 9/00, G21C 19/06, G21F 5/005, G21F 5/008, G21F 5/10

(54) **DISPOSITIF DE STOCKAGE LONGUE DUREE INTEGRANT UN ETUI DE STOCKAGE VENTILE DESTINE A RECEVOIR UN ETUI DE CONFINEMENT CONTENANT DES MATIERES RADIOACTIVES**
EINRICHTUNG ZUR LANGZEITLAGERUNG MIT EINEM BELÜFTETEN LAGERKANISTER ZUM UMSCHLIESSEN EINES RADIOAKTIVE MATERIALIEN ENTHALTENDEN SICHERHEITSKANISTERS
SYTEM FOR LONG-TERM STORAGE WITH A VENTILATED STORAGE CANISTER FOR ENCLOSING A CONTAINMENT CANISTER CONTAINING RADIOACTIVE MATERIALS

(30) Priorité: 21.12.2010 FR 1060952
(43) Date de publication de la demande: 30.10.2013
(73) Titulaire: TN International, 78182 Montigny Le Bretonneux (FR)
(72) Inventeur: GARCIA, Justo, F-92400 Courbevoie (FR); PRUD'HOMME, Pascal, F-75017 Paris (FR); YOKOE, Dai, F-78180 Montigny Le Bretonneux (FR)
(74) Mandataire: Ilgart, Jean-Christophe
(86) Numéro de dépôt international: PCT/EP2011/073331
(87) Numéro de publication internationale: WO 2012/084891

(56) Documents cités:
- EP-A1- 0 019 544
- EP-A2- 1 359 594
- EP-A2- 1 683 998
- WO-A1-00/04558
- WO-A2-2008/030987
- DD-A1- 271 729
- FR-A1- 2 918 649
- US-A- 4 780 269
- US-A1- 2006 188 054

## Description

### DOMAINE TECHNIQUE

La présente invention se rapporte de façon générale à un dispositif de stockage longue durée destiné à recevoir un étui de confinement contenant des matières radioactives, tels que des assemblages de combustible nucléaire irradiés, des déchets nucléaires, etc.

L'invention concerne également un site de stockage longue durée pour matières radioactives, comprenant une pluralité de dispositifs de stockage longue durée.

Elle porte en outre sur un procédé de transfert d'un étui de confinement contenant des matières radioactives, d'un emballage de transfert vers un dispositif de stockage longue durée.

### ÉTAT DE LA TECHNIQUE ANTÉRIEURE

Lorsqu'un assemblage de combustible nucléaire a été irradié suite à son utilisation dans une centrale nucléaire, il peut être placé dans un conteneur étanche appelé étui de confinement, avant d'être stocké sur une période longue de vingt à soixante ans, par exemple dans un site de stockage, également dénommé site d'entreposage longue durée.

Pour assurer le transport de l'étui vers le site de stockage, l'étui est tout d'abord placé dans un emballage dit emballage de transport ou emballage de transfert, afin de former un ensemble appelé colis.

Le colis est ensuite acheminé vers le site de stockage sur lequel il est mis en oeuvre un procédé de transfert de l'étui de l'emballage, vers une cavité de réception ventilée prévue au sein du dispositif de stockage. Ce dispositif peut prendre la forme d'un emballage de stockage longue durée, ou encore d'un module en béton tel que celui connu du document US 4 780 269. Ce dernier cas est intéressant en ce sens qu'il offre un logement de réception horizontal, facilitant le procédé de transfert de l'étui de confinement. En effet, il est habituellement prévu d'aligner l'emballage de transfert intégrant l'étui de confinement avec le logement de réception du module de béton tous deux agencés horizontalement, puis de tirer ou de pousser sur cet étui afin de le transférer de son logement d'emballage vers la cavité de réception associée. Cette technique de transfert est aussi connue du document US 4 780 269.

Dans l'autre cas de transfert vers un emballage de stockage longue durée, le chargement de l'étui dans la cavité de réception peut s'effectuer de la manière décrite dans le document FR 2 918 649, à savoir également à l'horizontale, avant de faire rebasculer l'emballage chargé dans sa position verticale de stockage longue durée.

Le transfert d'étui peut également être effectué à la verticale, cette technique étant par exemple connue du document EP 1 359 594.

Quelle que soit la solution retenue, durant son stockage longue durée dans sa cavité, l'étui de confinement contenant les matières radioactives est sujet à fissurations par corrosion sous contrainte. Ce risque, qui est naturellement accentué lorsque l'étui de confinement est exposé à une atmosphère contenant du sel marin, concerne en particulier les parties de l'étui situées à proximité des soudures, puisque ce sont celles-ci qui sont à l'origine des fortes contraintes internes dans l'étui.

Etant donné que la propagation de telles fissurations peut conduire à une rupture du confinement des matières radioactives, il s'avère alors nécessaire de prendre des mesures visant à limiter/interdire le développement de toute corrosion sur l'étui.

Une solution connue consiste à prévoir un étui de stockage dans lequel est logé, de manière étanche, l'étui de confinement contenant les matières radioactives. Elle permet à l'étui de stockage de constituer un rempart contre la corrosion de l'étui de confinement, puisque si des fissurations par corrosion sous contrainte se développent, elles concerneront d'abord cet étui de protection.

Un tel étui de stockage peut alternativement ou simultanément être prévu pour réaliser un double confinement des matières radioactives, en combinaison, donc, avec l'étui de confinement. Cette solution est par exemple connue du document WO 00/04558.

Quelle que soit la fonction de l'étui de stockage, en exploitation, le chargement de l'étui de confinement dans cet étui de stockage ainsi que le chargement des matières radioactives dans l'étui de confinement s'effectuent sur le site du réacteur nucléaire, puis les deux couvercles d'étui sont fixés sur leur corps d'étui respectif, l'un après l'autre.

C'est ensuite cet ensemble à double étui qui subit les mêmes étapes que celles mentionnées ci-dessus, à savoir le transport puis le transfert vers un dispositif de stockage longue durée, ventilé.

Cependant, cette solution rend le transport onéreux, puisque la présence d'un étui supplémentaire augmente la masse globale de l'ensemble transporté, ou bien diminue la charge utile transportable de matières radioactives. De plus, en cas de fissurations par corrosion sous contrainte de l'étui de stockage, ou de toute autre dégradation nécessitant une intervention, c'est la totalité de l'ensemble à double étui qui est réacheminée vers le site du réacteur nucléaire pour y subir l'intervention requise. Une fois celle-ci achevée, l'ensemble à double étui est à nouveau transporté vers le site de stockage longue durée, pour y être installé dans son dispositif associé. La multiplication de ces transports, combinée aux coûts élevés de ces derniers, rend le procédé particulièrement onéreux.

En outre, les emballages de transport/transfert peuvent être amenés à subir d'importantes modifications pour accueillir un tel ensemble, qui se différencie des simples étuis de confinement que les emballages de transport/transfert logent habituellement.

Enfin, la présence de l'étui de stockage constitue une barrière à l'évacuation de chaleur dégagée par les matières radioactives durant le transport. Il en résulte un risque d'augmentation inacceptable de la température au sein de l'étui de confinement.

### EXPOSÉ DE L'INVENTION

L'invention a donc pour but principal de proposer un dispositif de stockage longue durée dont la conception permet de remédier au moins partiellement aux inconvénients mentionnés ci-dessus, relatifs aux réalisations de l'art antérieur.

Pour ce faire, l'invention a pour objet un dispositif de stockage longue durée selon la revendication l,une site de stockage longue durée selon la revendication 9 et un procédé de transfert d'un étui de confinement selon la revendication 10.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un site de stockage longue durée pour matières radioactives, selon un mode de réalisation préféré de la présente invention ;
- la figure 2 représente une vue de dessus du site montré sur la figure 1 ;
- la figure 3 représente une vue en perspective montrant un dispositif de stockage longue durée selon un premier mode de réalisation de la présente invention, le dispositif se présentant sous la forme d'un emballage de stockage longue durée chargé d'un étui de confinement de matières radioactives ;

- la figure 4 représente une vue éclatée en perspective de l'emballage montré sur la figure 3 ;
- la figure 5 représente une vue partielle en coupe d'une partie inférieure de l'emballage chargé montré sur les figures 3 et 4 ;
- les figures 6a et 6b représentent l'étui de stockage équipant l'emballage montré sur les figures 3 à 5, selon deux conceptions distinctes ;
- la figure 7 représente une autre vue en perspective de la partie inférieure de l'emballage chargé montré sur les figures 3 à 6b ;
- les figures 8a à 8c représentent des vues schématisant différentes étapes successives d'un procédé de transfert d'un étui de confinement contenant des matières radioactives, selon un mode de réalisation de la présente invention ;
- la figure 9 représente une vue en perspective montrant deux dispositifs de stockage longue durée selon un second mode de réalisation de la présente invention, chaque dispositif intégrant un module en béton ; et
- la figure 10 représente une vue en coupe d'une partie avant de l'un des deux dispositifs de stockage montrés sur la figure précédente.

### EXPOSÉ DÉTAILLÉ DE MODES DE RÉALISATION PRÉFÉRÉS

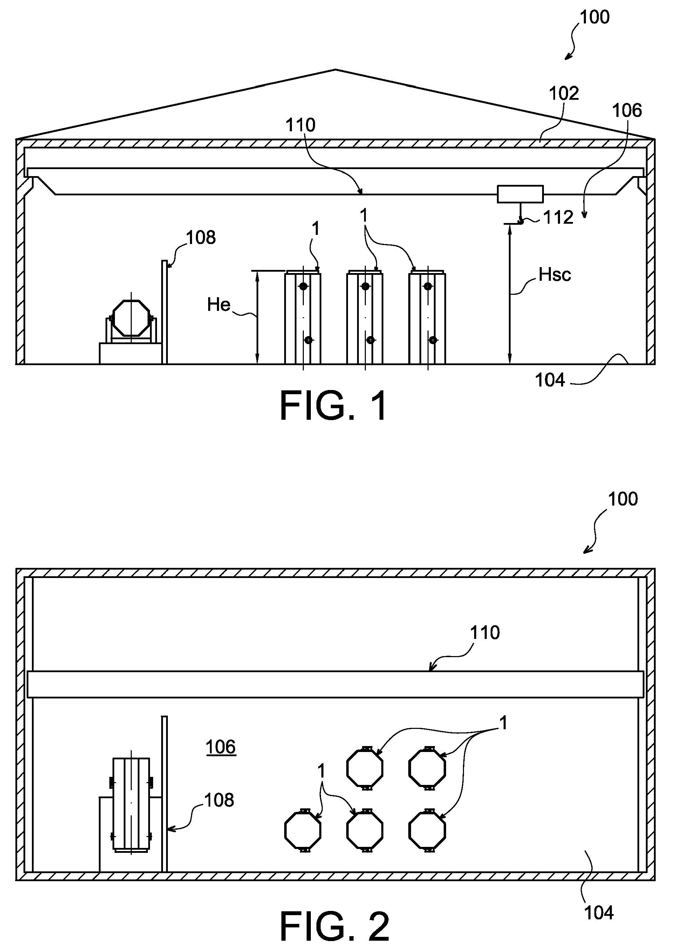

En référence tout d'abord aux figures 1 et 2, on peut apercevoir un site de stockage longue durée 100 pour matières radioactives, selon un mode de réalisation préféré de la présente invention. Le site 100 est fermé vers le haut par un plafond 102, qui lui fait prendre la forme d'un « hall de stockage », dans lequel les matières radioactives sont destinées à être stockées durant une longue période d'environ vingt à soixante ans.

Le hall 100 présente un sol 104 sur lequel reposent verticalement une pluralité d'emballages de stockage longue durée 1, également objets de la présente invention, qui seront détaillés ci-après. D'une manière générale, en configuration chargée, chacun d'eux loge un étui de confinement contenant des matières radioactives tels que des assemblages de combustible nucléaire irradiés, l'emballage et l'étui étant entreposés dans une position verticale

Cette façon de stocker verticalement les emballages 1 permet d'optimiser fortement l'encombrement de l'espace de stockage 106 situé entre le sol 104 et le plafond 102, et donc de maximiser le nombre d'emballages 1 susceptibles d'être stockés simultanément dans cet espace 106. A titre indicatif, les emballages 1 sont stockés en rangées parallèles.

D'autre part, le hall 100 est équipé d'un châssis 108 de pivotement des emballages, permettant de faire pivoter chacun des emballages de stockage de la position horizontale à la position verticale lors de l'opération de transfert de l'étui associé, comme cela sera détaillé ci-après.

En outre, le hall 100 comprend un pont de levage/manutention des emballages, référencé 110, permettant en particulier de déplacer les emballages 1 au sein de l'espace de stockage 106, tout en les maintenant en position verticale.

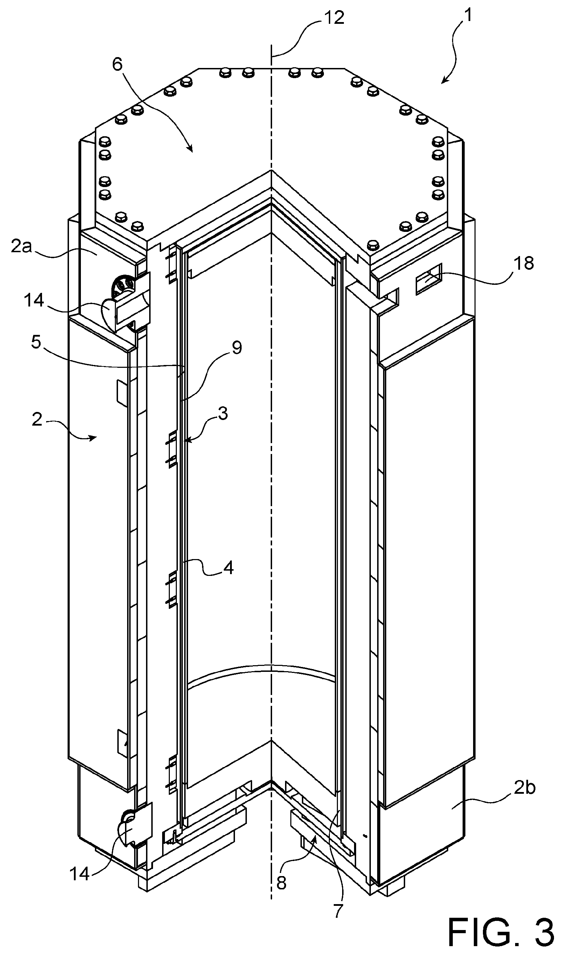

En référence aux figures 3 à 7, il va être décrit l'un des emballages de stockage 1, chargé de l'étui de confinement 3 contenant les matières radioactives (non représentées).

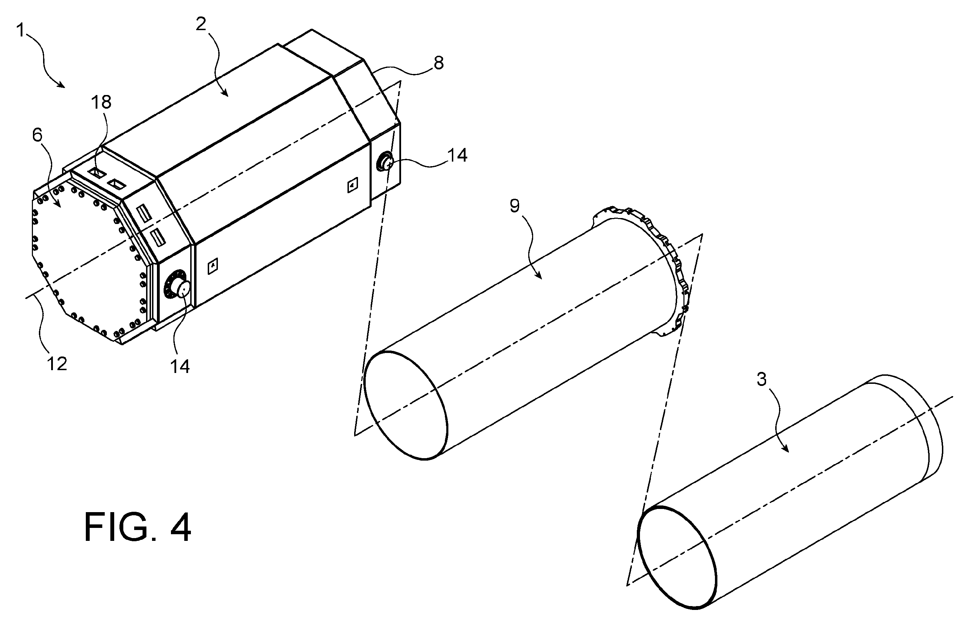

Tout d'abord plus spécifiquement en référence aux figures 3 et 4, l'emballage 1, d'axe longitudinal 12, comporte un corps principal latéral creux 2 de forme cylindrique, présentant une surface latérale intérieure 5 définissant un logement 7 également de forme sensiblement cylindrique. Le logement 7 reçoit un étui de stockage 9 conférant une fonction de protection contre la corrosion de l'étui de confinement 3, qu'il reçoit de manière étanche dans une cavité 4 que cet étui 9 délimite intérieurement. L'étui 9 assure également, en combinaison avec l'étui 3, un double confinement des matières radioactives.

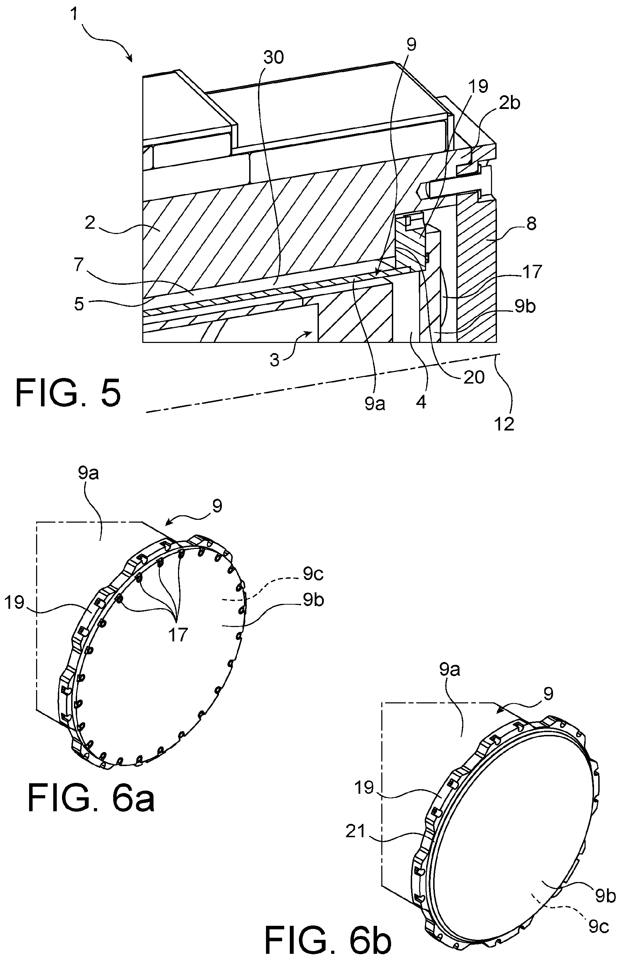

L'emballage 1 comporte aussi un couvercle de tête amovible 6 fermant le logement 7 au niveau d'une extrémité haute 2a du corps 2, ainsi qu'un fond d'emballage amovible 8 fermant également le logement 7 au niveau de l'autre extrémité du corps latéral 2, dite extrémité basse 2b. Le fond d'emballage 8 prend donc la forme d'un couvercle de fond amovible, qui est par conséquent assemblé de manière réversible sur le corps latéral 2, par exemple par boulonnage ou équivalent comme cela a été schématisé sur la figure 5. Comme cela sera détaillé ci-après, cela permet, lors d'un procédé de transfert d'étui, d'introduire ce dernier par l'extrémité basse 2b du corps d'emballage 2.

Comme cela est montré sur les figures 6a et 6b, l'étui 9 est réalisé à l'aide d'un corps latéral cylindrique 9a de section circulaire, intégrant un fond (non visible) généralement rapporté fixement par soudage sur le corps latéral, ce dernier définissant à l'extrémité opposée une ouverture 9c obturée par un couvercle d'étui amovible 9b. Le couvercle 9b est monté fixement de façon réversible sur le corps d'étui 9a, par exemple par boulons 17 ou soudure 21, de manière à procurer l'étanchéité désirée dans la cavité 4. Cette étanchéité sert en particulier, en configuration chargée, à placer un gaz inerte sous pression dans la cavité 4, autour de l'étui de confinement 3. Cela permet de renforcer la fonction anticorrosion. L'étanchéité créée participe aussi à la réalisation d'un second confinement des matières radioactives déjà confinées dans l'étui 3.

Le gaz inerte peut être de l'hélium sous une pression par exemple comprise entre 1,1 et 2 bars. Pendant le stockage longue durée, la pression du gaz peut être contrôlée de manière à détecter une éventuelle fuite d'étanchéité de l'étui de stockage, par exemple produite par une ou plusieurs fissurations par corrosion sous contrainte. Suite à cette détection de rupture d'étanchéité, il est alors réalisé une intervention sur l'étui de stockage, comme cela sera décrit ultérieurement. A titre indicatif, il est noté que le suivi de la pression dans la cavité 4 sert non seulement à détecter une rupture d'étanchéité de l'étui 9, mais également à détecter une rupture d'étanchéité de l'étui de confinement 3 qui est généralement en dépression dans cette cavité 4.

L'étui de stockage 9 et l'étui de confinement 3 sont tous les deux métalliques, par exemple réalisés en acier inoxydable.

Par ailleurs, l'emballage 1 assure les fonctions habituelles de protection neutronique, de protection contre le rayonnement gamma, et de résistance mécanique. Pour ce faire, on peut notamment prévoir que l'épaisseur du corps latéral creux 2 soit d'au moins 200 mm, et réalisé en acier. L'utilisation de béton pour la réalisation du corps latéral peut également être envisagée.

L'emballage 1 comprend aussi une pluralité d'organes de manutention 14, également dits tourillons de manutention, destinés à coopérer avec un palonnier (non représenté) suspendu au crochet 112 du pont de levage 110 pour permettre la mise en mouvement de l'emballage. Ils peuvent être au nombre de quatre ou plus, répartis à proximité des extrémités haute et basse du corps latéral 2, duquel ils font saillie radialement vers l'extérieur.

Par ailleurs, l'emballage 1 comprend des moyens de ventilation permettant une circulation d'air par convection naturelle ou forcée entre l'extérieur du dispositif de stockage, et un espace annulaire 30 du logement 7, référencé sur la figure 5, qui est délimité entre la surface intérieure 5 du corps principal 2 et l'étui de stockage 9 assurant la protection contre la corrosion.

Ces moyens spécifiques, assurant une circulation d'air permettant de collecter et d'évacuer une partie de la chaleur dégagée par les matières radioactives contenues dans l'étui 3, peuvent être réalisés de toute façon connue de l'homme du métier.

A titre indicatif, en référence plus particulièrement aux figures 5 à 7, on peut voir que le couvercle inférieur 8 de l'emballage, monté par boulons sur l'extrémité inférieure 2b du corps latéral, présente des passages traversants 17 permettant de faire communiquer l'extérieur de l'emballage 1 avec le logement 7. Des passages traversants analogues 18 sont prévus au niveau de l'extrémité supérieure 2a du corps latéral, sous le couvercle supérieur 6, dans le même but de faire communiquer le logement 7 avec l'extérieur.

De plus, le corps d'étui 9a présente au niveau de son ouverture 9c une collerette 19 en appui contre un épaulement 20 du corps latéral 2. Des boulons 22 permettent de plaquer la collerette 19 contre l'épaulement 20, l'ensemble des éléments 22, 19 et 20 constituant de ce fait des moyens de blocage en translation de l'étui de stockage 9 par rapport au corps principal 2, selon une direction d'introduction / d'extraction de l'étui de confinement 3 dans / en dehors de la cavité 4, correspondant à la direction de l'axe 12.

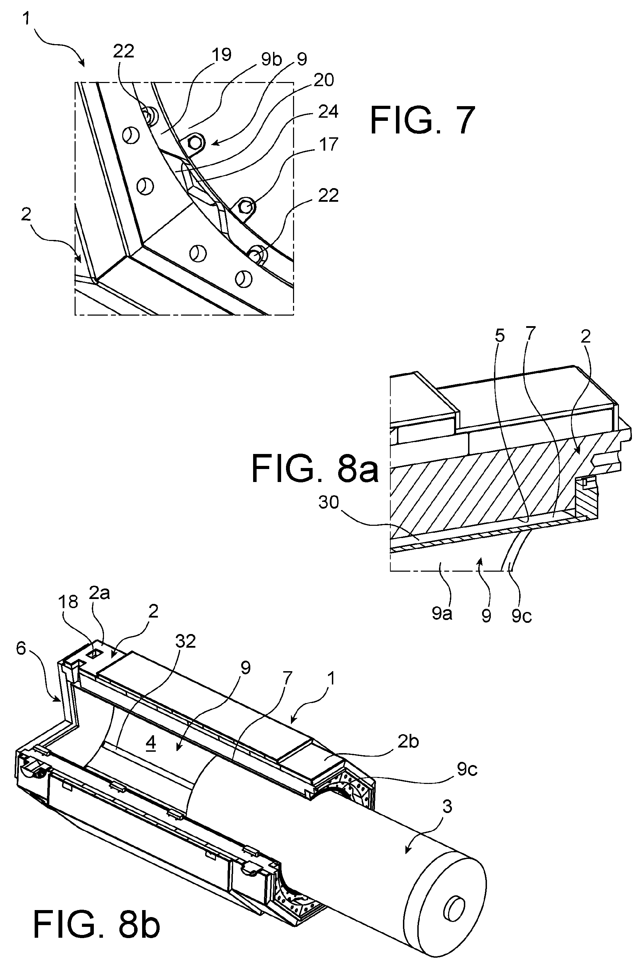

Pour permettre le passage de l'air à travers ce montage, la collerette 19 et l'épaulement 20 sont dentelés, et décalés angulairement l'un par rapport à l'autre de manière à ménager entre les dents des espaces libres 24 de traversée d'air, comme cela est le mieux visible sur la figure 7.

Ainsi, l'air extérieur transite à travers le couvercle inférieur 8 via les passages traversants 17, pour ensuite traverser les espaces libres 24 définis par la collerette 19 et l'épaulement 20. Il pénètre ensuite au sein de l'espace annulaire libre 30, entre l'étui 9 et la surface intérieure 5 du logement 7.

A partir de cet instant, lorsque l'emballage est en position verticale, l'air collecte de la chaleur dégagée par les matières radioactives contenues dans l'étui 3, et chemine vers le haut en raison de son réchauffement. Tout le long de son cheminement vers le haut, l'air épousant l'étui 9 collecte donc de la chaleur dégagée par les matières radioactives, pour ensuite l'évacuer en s'échappant de l'espace annulaire 30 par les passages traversants 18 de l'extrémité supérieure 2a. L'air sortant de ces passages 18 rejoint alors l'environnement extérieur de l'emballage, étant par ailleurs noté que le phénomène qui vient d'être explicité se produit de manière continue.

Enfin, il est indiqué que la surface intérieure délimitant la cavité 4 peut être équipée de moyens permettant d'aider l'étui 3 à coulisser par rapport à l'étui 9 lors de son introduction ainsi que lors de son extraction, ces moyens prenant par exemple la forme de rampes/rails parallèles s'étendant selon la direction de l'axe longitudinal 12, correspondant également à la direction de coulissement de l'étui 3 dans l'étui 9. Des moyens analogues peuvent être prévus sur la surface intérieure 5 délimitant le logement 7, pour aider au coulissement de l'étui 9 dans le corps latéral 2, lors de son introduction ainsi que lors de son extraction.

A cet égard, l'invention se rapporte également à un procédé de transfert d'un tel étui de confinement 3 contenant des matières radioactives, d'un emballage de transfert à fond fixe vers la cavité 4 d'un emballage de stockage longue durée 1 qui vient d'être décrit. A titre indicatif, il est noté que l'emballage de transfert peut être un emballage conçu uniquement pour assurer un tel transfert de l'étui sur un même site nucléaire, par exemple entre le réacteur nucléaire et le site stockage longue durée, cet emballage n'étant alors pas conçu pour emprunter la voie publique, ou un emballage de transport de matières radioactives spécialement conçu pour emprunter la voie publique, comme cela est connu de l'homme du métier.

Les figures 8a à 8c représentent différentes étapes successives d'un procédé de transfert selon un mode de réalisation de la présente invention.

Le procédé est débuté avec l'emballage 1 en configuration non chargée, c'est-à-dire sans l'étui 3. Par conséquent, il présente une conception identique à celle montrée sur les figures précédentes, sans intégrer l'étui 3 contenant les matières radioactives. En particulier, l'ensemble formé des boulons 22, de la collerette 19 et de l'épaulement 20 assure le blocage en translation de l'étui 9 par rapport au corps 2, selon la direction de l'axe 12 correspondant aux directions d'extraction / d'introduction des étuis 3 et 9.

L'emballage 1 est d'abord déplacé en position horizontale, à l'aide de ses tourillons 14 et du châssis 108 présent dans le hall 100 représenté sur les figures 1 et 2.

Le couvercle inférieur 8 formant fond d'emballage est retiré, puis c'est le couvercle d'étui 9b qui est ensuite extrait pour laisser apparaitre l'ouverture d'étui 9c, comme cela est visible sur la figure 8a.

Par ailleurs, un emballage de transfert (non représenté) contenant l'étui 3 à transférer est amené en regard de l'ouverture 9c, à l'aide d'un véhicule de transport sur lequel l'emballage de transfert repose horizontalement, avec la tête d'étui orientée en direction de cette ouverture 9c. La mise en regard et à distance des deux emballages est réalisée de telle sorte que leurs axes longitudinaux respectifs soient sensiblement confondus.

L'étape suivante consiste, après avoir retiré le couvercle de tête amovible de l'emballage de transfert, à déplacer le véhicule de manière à ce que l'emballage de transfert vienne accoster l'emballage de stockage 1.

Une fois le contact établi, l'arrimage peut s'effectuer en reliant mécaniquement les tourillons de manutention des deux emballages, par exemple à l'aide de poutres présentant des échancrures pour le logement des tourillons.

L'étape suivante consiste à introduire l'étui 3 dans la cavité 4 de l'étui 9 à travers l'ouverture 9c, comme cela a été schématisé sur la figure 8b. Pour ce faire, des moyens de mise en mouvement classiques et connus de l'homme du métier sont actionnés. Ce déplacement conduit alors l'étui 3 à pénétrer progressivement au sein de la cavité 4 avec sa tête vers l'avant. De plus, en fin de déplacement de l'étui 3 restant toujours horizontal, la tête d'étui se trouve située au niveau de l'extrémité haute 2a du corps d'emballage, en regard du couvercle de tête amovible 6 resté à demeure sur l'emballage 1. A titre indicatif, durant le déplacement horizontal de l'étui 3, son glissement au sein de l'étui de stockage 9 est facilité par la présence des rampes précitées sur lesquelles il repose, référencées 32 sur la figure 8b.

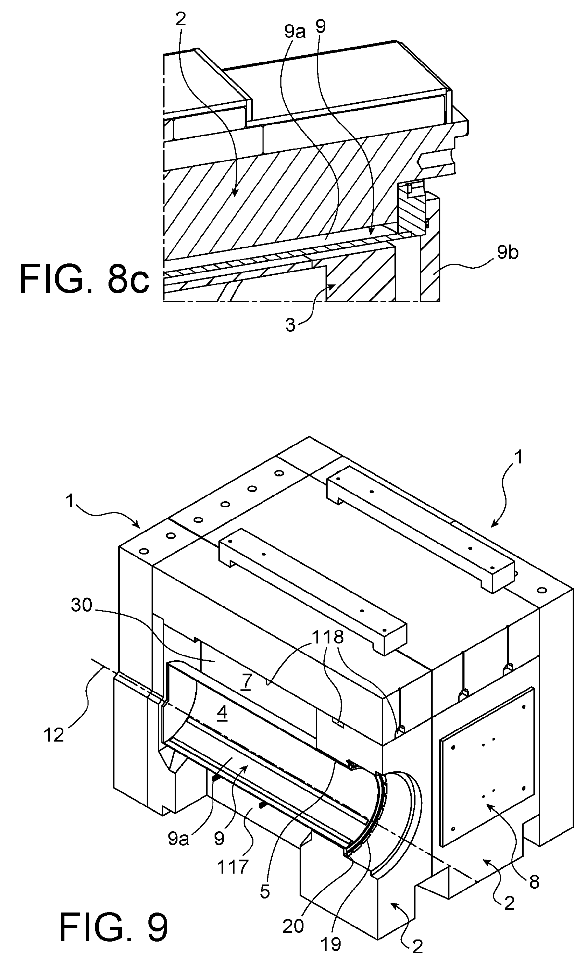

Après rupture de l'arrimage et de l'accostage, il est procédé à la fermeture étanche de l'étui 9, par fixation réversible du couvercle 9b, par boulons ou soudure, comme cela est montré sur la figure 8c. C'est à ce stade que l'introduction du gaz inerte dans la cavité 4 peut être opérée, par des moyens conventionnels. Ensuite, c'est au tour du couvercle inférieur 8 d'être monté sur l'extrémité 2b du corps latéral, toujours par boulons.

Enfin, l'emballage 1 est basculé à la verticale par le châssis 108, puis le pont de levage réachemine l'emballage 1 chargé de l'étui 3 dans sa position de stockage au sein de l'espace de stockage, toujours en le maintenant suspendu par ses tourillons supérieurs 14 lui assurant un déplacement en position verticale.

Avant le re-basculement en position verticale, les boulons 22 peuvent être retirés afin de rompre la fixation en translation de l'étui 9 par rapport au corps latéral 2. Cela permet d'éviter à ces boulons 22 de reprendre l'ensemble des efforts de masse du double étui chargé, durant la longue période de stockage en position verticale. Au contraire, ce double étui peut alors simplement reposer sur le fond amovible 8 de l'emballage.

Le même procédé de transfert peut ensuite être réitéré pour un emballage de stockage suivant, après qu'il ait été placé sur le châssis de pivotement 108 en position horizontale.

Pendant le stockage longue durée, lorsque le contrôle de la pression du gaz inerte révèle une chute de pression, cela traduit une probable fuite d'étanchéité de l'étui de stockage 9, par exemple produite par une ou plusieurs fissurations par corrosion sous contrainte. Suite à cette détection, les couvercles 8 et 9c peuvent être retirés afin d'extraire l'étui de confinement 3, pour ensuite le reloger au sein d'un autre dispositif de stockage 1 situé à proximité, selon le même procédé que celui qui vient d'être décrit. Cette extraction par coulissement de l'étui 3 s'effectue par exemple en position horizontale, avec les boulons 22 remontés afin de bloquer en translation l'étui 9 par rapport au corps principal 2. Ce blocage en translation de l'étui 9 permet de faciliter l'extraction de l'étui 3 situé en son sein.

L'étui de stockage défaillant 9 peut quant à lui être extrait du logement 7 par coulissement, après dévissage des boulons 22, pour être ensuite réparé ou remplacé.

Alternativement, le mode de réalisation qui vient d'être décrit peut être mis en oeuvre de manière analogue avec un chargement et une extraction de l'étui 3 non plus à l'horizontale, mais à la verticale, en venant placer l'emballage de transfert verticalement au-dessus de l'emballage de stockage.

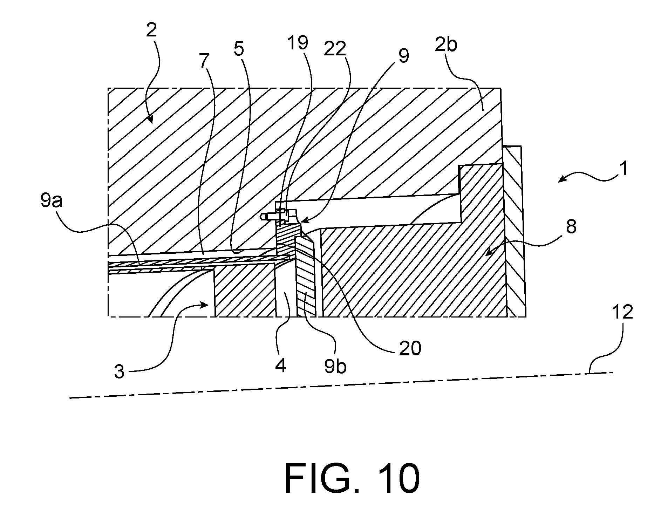

En référence à présent aux figures 9 et 10, il va être décrit un dispositif de stockage 1 selon un second mode de réalisation. Ce second mode présente de grandes similitudes avec le premier mode de réalisation décrit en référence aux figures précédentes. A cet égard, sur les figures, les éléments portant les mêmes référence numériques correspondent à des éléments identiques ou similaires.

Ainsi, on peut s'apercevoir que la différence essentielle avec le premier mode réside dans le fait que le corps principal 2 n'est pas une partie d'emballage, mais un module en béton permettant de stocker l'étui de confinement 3 à l'horizontale.

En outre, les moyens de ventilation permettant la circulation de l'air présentent une ouverture 117 dans la partie inférieure du corps principal 2, sous l'étui 9, permettant de faire communiquer l'air extérieur avec le logement 7. L'air circule ensuite vers le haut dans l'espace annulaire 30, circonférentiellement autour de l'étui de stockage 9, avant de rejoindre un réseau de canaux 118 permettant à l'air de s'échapper vers le haut, à l'extérieur du dispositif de stockage longue durée 1.

Avec cette conception, les boulons 22 peuvent rester en permanence sur la collerette 19 de l'étui 9, en particulier durant le stockage longue durée, et ne sont alors retirés que lorsque cet étui 9 doit être extrait du logement 7 pour être réparé ou remplacé.

Bien entendu, diverses modifications peuvent être apportées par l'homme du métier à l'invention qui vient d'être décrite, uniquement à titre d'exemples non limitatifs.

## Revendications

1. Dispositif de stockage longue durée (1) comprenant, dans une configuration chargée, un étui de confinement (3) contenant des assemblages de combustible nucléaire irradiés, ledit dispositif comprenant un corps principal (2) présentant une surface intérieure (5) délimitant un logement (7), et comprenant, dans une configuration non-chargée du dispositif de stockage dans laquelle ledit étui de confinement (3) contenant des assemblages de combustible nucléaire irradiés est absent de ce dispositif de stockage, un étui de stockage (9) logé dans ledit logement (7) du corps, et délimitant une cavité (4) recevant l'étui de confinement (3) dans ladite configuration chargée, ledit dispositif de stockage comprenant également des moyens de ventilation (17, 18, 117, 118) permettant une circulation d'air entre l'extérieur du dispositif de stockage et un espace (30) délimité entre ladite surface intérieure (5) du corps principal (2) et l'étui de stockage (9).

2. Dispositif de stockage selon la revendication 1, comprenant des moyens (22) de blocage en translation de l'étui de stockage (9) par rapport au corps principal (2), selon une direction d'introduction et/ou d'extraction de l'étui de stockage dans / en dehors dudit logement.

3. Dispositif de stockage selon la revendication 1 ou la revendication 2, conçu de sorte que l'étui de stockage (9) peut être inséré / extrait du logement (7) par coulissement.

4. Dispositif de stockage selon l'une quelconque des revendications précédentes, dont l'étui de stockage (9) est métallique.

5. Dispositif de stockage selon l'une quelconque des revendications précédentes, dont l'étui de stockage (9) comprend un couvercle (9b), qui, lorsqu'il est retiré, définit une ouverture d'étui (9c) par laquelle ledit étui de confinement (3) peut être inséré / extrait.

6. Dispositif de stockage selon l'une quelconque des revendications précédentes, comprenant un couvercle (8) monté sur le corps principal (2) et fermant ledit logement (7).

7. Dispositif de stockage selon l'une quelconque des revendications précédentes, comprenant dans ladite configuration chargée dans laquelle ledit étui de confinement (3) contenant des assemblages de combustible nucléaire irradiés est logé de manière étanche dans la cavité (4) de l'étui de stockage (9), un gaz inerte présent dans la cavité autour de l'étui de confinement.

8. Dispositif de stockage selon l'une quelconque des revendications précédentes, ledit corps principal (2) étant une partie d'un emballage de stockage ou un module en béton.

9. Site de stockage longue durée (100) pour assemblages de combustible nucléaire irradiés, ledit site comprenant une pluralité de dispositifs de stockage longue durée (1) selon l'une quelconque des revendications précédentes.

10. Procédé de transfert d'un étui de confinement (3) contenant des assemblages de combustible nucléaire irradiés, d'un emballage de transfert vers un dispositif de stockage longue durée (1) selon l'une quelconque des revendications 1 à 8, et comportant une étape visant à introduire ledit étui de confinement (3) contenant des assemblages de combustible nucléaire irradiés dans ladite cavité (4) de l'étui de stockage (9), lui-même logé dans ledit logement (7) du corps principal (2), suivie d'une étape consistant à fermer de manière étanche ledit étui de stockage (9).

## Patentansprüche

1. Langzeit-Lagerungsvorrichtung (1), umfassend, in einer beladenen Konfiguration, eine Confinement-Hülle (3), die bestrahlte Kernbrennstoffanordnungen enthält, wobei die Vorrichtung einen Hauptkörper (2) umfasst, der eine Innenoberfläche (5) aufweist, die eine Aufnahme (7) begrenzt, und umfassend, in einer nicht-beladenen Konfiguration der Lagerungsvorrichtung, in der die die bestrahlten Kernbrennstoffanordnungen enthaltende Confinement-Hülle (3) nicht in dieser Lagerungsvorrichtung vorhanden ist, eine Lagerungshülle (9), die in der Aufnahme (7) des Körpers aufgenommen ist und einen Hohlraum (4) begrenzt, der in der beladenen Konfiguration die Confinement-Hülle (3) empfängt, wobei die Lagerungsvorrichtung ferner Belüftungsmittel (17, 18, 117, 118) umfasst, die eine Luftzirkulation erlauben zwischen der Außenseite der Lagerungsvorrichtung und einem Raum (30), der zwischen der Innenoberfläche (5) des Hauptkörpers (2) und der Lagerungshülle (9) begrenzt ist.

2. Lagerungsvorrichtung nach Anspruch 1, umfassend Mittel (22) zum Blockieren einer Translation der Lagerungshülle (9) bezüglich des Hauptkörpers (2) entlang einer Einführ- und/oder Ausführrichtung der Lagerungshülle in die/aus der Aufnahme.

3. Lagerungsvorrichtung nach Anspruch 1 oder Anspruch 2, die dazu ausgelegt ist, dass die Lagerungshülle (9) gleitend in die Aufnahme (7) eingeführt bzw. aus ihr ausgeführt werden kann.

4. Lagerungsvorrichtung nach einem der vorhergehenden Ansprüche, deren Lagerungshülle (9) metallisch ist.

5. Lagerungsvorrichtung nach einem der vorhergehenden Ansprüche, deren Lagerungshülle (9) einen Deckel (9b) umfasst, der, wenn er abgenommen ist, eine Hüllenöffnung (9c) definiert, durch die die Confinement-Hülle (3) eingeführt/ausgeführt werden kann.

6. Lagerungsvorrichtung nach einem der vorhergehenden Ansprüche, umfassend einen Deckel (8), der an dem Hauptkörper (2) montiert ist und die Aufnahme (7) verschließt.

7. Lagerungsvorrichtung nach einem der vorhergehenden Ansprüche, umfassend, in der beladenen Konfiguration, in der die Confinement-Hülle (3), welche bestrahlte Kernbrennstoffanordnungen enthält, in dichter Weise in dem Hohlraum (4) der Lagerungshülle (9) aufgenommen ist, ein Inertgas, das in dem Hohlraum um die Confinement-Hülle herum vorhanden ist.

8. Lagerungsvorrichtung nach einem der vorhergehenden Ansprüche, wobei der Hauptkörper (2) Teil einer Lagerungsverpackung oder ein Betonmodul ist.

9. Langzeit-Lagerstelle (100) für bestrahlte Kernbrennstoffanordnungen, wobei die Stelle eine Mehrzahl von Langzeit-Lagerungsvorrichtungen (1) nach einem der vorhergehenden Ansprüche umfasst.

10. Verfahren zum Transferieren einer Confinement-Hülle (3), die bestrahlte Kernbrennstoffanordnungen enthält, von einer Transferverpackung zu einer Langzeit-Lagerungsvorrichtung (1) nach einem der Ansprüche 1 bis 8, umfassend einen Schritt zum Einführen der Confinement-Hülle (3), die bestrahlte Kernbrennstoffanordnungen enthält, in den Hohlraum (4) der Lagerungshülle (9), die selbst wiederum in der Aufnahme (7) des Hauptkörpers (2) aufgenommen ist, gefolgt von einem Schritt des Schließens der Lagerungshülle (9) in dichter Weise.

## Claims

1. A long-term storage device (1) comprising in a loaded configuration, a containment case (3) containing "irradiated nuclear fuel assemblies", where the said device includes a main body (2) having an inner surface (5) delimiting a housing (7), and comprising,
in an unloaded configuration of the storage device in which the said containment case (3) containing "irradiated nuclear fuel assemblies" is absent from the storage device, a storage case (9) housed in the said housing (7) of the body, and delimiting a cavity (4) receiving the containment case (3) in the loaded configuration, where the said storage device also includes ventilation means (17, 18, 117, 118) allowing air to circulate between the exterior of the storage device and a space (30) delimited between the said inner surface (5) of the main body (2) and the storage case (9).

2. A storage device according to claim 1, including means (22) to prevent the storage case (9) sliding relative to the main body (2), in a direction in which the storage case is introduced into and/or extracted from the said housing.

3. A storage device according to claim 1 or claim 2, designed such that the storage case (9) can be inserted into/extracted from the housing (7) by sliding.

4. A storage device according to any one of the previous claims, with the storage case (9) made of metal.

5. A storage device according to any one of the previous claims, with the storage case (9) including a cover (9b) which, when it is removed, defines a case opening (9c), through which the said containment case (3) can be inserted/extracted.

6. A storage device according to any one of the previous claims, including a cover (8) installed on the main body (2) and closing the said housing (7).

7. A storage device according to any one of the previous claims, comprising in said loaded configuration in which the said containment case (3) containing "irradiated nuclear fuel assemblies" is housed in sealed fashion in the cavity (4) of the storage case (9), an inert gas present in the cavity around the containment case.

8. A storage device according to any one of the previous claims, said main body (2) being a portion of a storage package or a concrete module.

9. A long-term storage site (100) for "irradiated nuclear fuel assemblies", where the said site includes multiple long-term storage devices (1) according to any one of the previous claims.

10. A method for transferring a containment case (3) containing "irradiated nuclear fuel assemblies" from a transfer package to a long-term storage device (1) according to any one of claims 1 to 8, including a step intended to introduce said containment case (3) containing "irradiated nuclear fuel assemblies" into the said cavity (4) of the storage case (9), which is itself housed in the said housing (7) of the main body (2), followed by a step consisting in closing, in sealed fashion, the said storage case (9).
